# EUROPÄISCHE PATENTANMELDUNG

(11) **EP 4 591 965 A1**
(43) Veröffentlichungstag der Anmeldung: **30.07.2025**
(21) Anmeldenummer: 25153694.2
(22) Anmeldetag: 24.01.2025
(51) Int. Cl.: B01D 46/00, B01D 46/10, B01D 46/64, B01D 46/88, B33Y 30/00

(54) **LUFTFILTER FÜR 3D-DRUCKERGEHÄUSE**

(30) Priorität: 25.01.2024 DE 102024102152; 25.01.2024 DE 202024100379 U
(71) Anmelder: Störk Umwelttechnik GmbH, 78576 Emmingen-Liptingen (DE)
(72) Erfinder: Sax, Manuel Bastian, 47051 Duisburg (DE); Gerl, Thomas, 78576 Emmingen (DE)
(74) Vertreter: Patentanwälte und Rechtsanwalt Weiß, Arat & Partner mbB

(57) **Zusammenfassung**

Bei vorliegender Erfindung handelt es sich um einen Luftfilter (1) für die Anordnung in und/oder an einem 3D-Druckergehäuse, mit einem Ventilator (9), einem austauschbaren HEPA-Filterelement (7) und einem austauschbaren Aktivkohlefilterelement (8), wobei ein Rohr (2) für die Aufnahme des Aktivkohlefilterelements (8), und einen Zylinder (3) mit Belüftungsöffnungen (12) für die Aufnahmen des HEPA-Filterelements (7), wobei das Rohr (2) einerseits eine erste Verschlusskappe (4) mit einer Öffnung (10) und andererseits eine zweite Verschlusskappe (5) mit einer weiteren Öffnung (11) aufweist, wobei der Ventilator (9) an einer Außenseite (13) der ersten Verschlusskappe (4) angeordnet ist, wobei das Rohr (2) über eine Aufnahme (6) an der Außenseite (13) der ersten Verschlusskappe (4) reversibel mit dem Zylinder (3) verbunden ist, wobei der Ventilator (9) innerhalb des Zylinders (3) angeordnet ist und wobei eine Klammerhalterung (14) vorhanden ist, welche den Luftfilter (1) mit dem 3D-Druckergehäuse reversibel verbindet.

## Beschreibung

### Technisches Gebiet

Die Erfindung betrifft einen Luftfilter für 3D-Druckergehäuse nach dem Oberbegriff des Anspruchs 1.

### Stand der Technik

Bei dem Betrieb von handelsüblichen 3D-Druckern für den Hausgebrauch entstehen unangenehm riechende Gase, welche, wenn sie eingeatmet werden oder mit dem Körper in Kontakt kommen, teilweise erheblich gesundheitsgefährdend sind. Obwohl dies hinreichend bekannt ist, weist die überwiegende Zahl der 3D-Drucker, die in einem 3D-Druckergehäuse angeordnet und für den privaten Gebrauch zu Hause vorgesehen sind, keine Vorrichtung auf, die die beim 3D-Drucken entstehenden schädlichen Gasen und Stoffe aus der Luft filtern.

Es sind bereits Luftfilter bekannt, die innerhalb eines Gehäuses der 3D-Drucker angeordnet werden können. Bei diesen 3D-Druckergehäusen handelt es sich oft um einen Kasten aus Plexiglas, in dem der 3D-Drucker angeordnet ist.

Es wird beispielsweise von dem französischen Hersteller "Alveo3D" ein Luftfilter für private 3D-Drucker bzw. 3D-Druckergehäuse angeboten, wobei dieser Luftfilter einen Ventilator, einen austauschbaren HEPA- und einen austauschbaren Aktivkohlefilter aufweist. Dieser Luftfilter ist für alle üblichen 3D-Drucker bzw. 3D-Druckergehäuse im Hausgebrauch nachrüstbar und kann sowohl als Umluftfilter als auch als Abluftfilter in und an dem 3D-Druckergehäuse angeordnet werden. Dabei wird dieser würfelförmige Luftfilter entweder in einer freien Ecke des 3D-Druckergehäuses gestellt, wobei er dann als Umluftfilter verwendet wird, oder er durchgreift das 3D-Druckergehäuse an einer geeigneten Stelle, wobei er dann als Abluftfilter verwendet wird.

Weiterhin sind zahlreiche andere Filtersystem bekannt, die insbesondere bei größeren und industriell eingesetzten 3D-Druckern verwendet werden. Diese Filtersysteme kennzeichnen sich durch ihre feste Installation an diesen 3D-Druckern und sind daher und wegen ihrer Größe und ihres Geräuschpegels nicht für die Anwendung an keinen 3D-Druckern bzw. 3D-Druckergehäuse zu verwenden.

### Aufgabe der Erfindung

Die Aufgabe der vorliegenden Erfindung ist es, die Nachteile aus dem Stand der Technik zu überwinden. Insbesondere soll ein mobiler Luftfilter für 3D-Drucker bzw. 3D-Druckergehäuse in Hausgebrauch bereitgestellt werden, welcher die Nachteile der bisherige Luftfilter überwindet. Dabei soll dieser mobile und nachrüstbare Luftfilter einen besseren Wirkungsgrad aufweisen, einfacher und platzsparender in und an dem 3D-Druckergehäuse platzierbar sein sowie leichter zu reinigen und günstiger in der Herstellung sein.

### Lösung der Aufgabe

Zur Lösung der Aufgabe führen die Merkmale nach dem Anspruch 1.

Vorteilhafte Ausgestaltungen sind in den Unteransprüchen beschrieben.

Der erfindungsgemäße Luftfilter weist einen Ventilator, ein austauschbares HEPA-Filterelement und ein austauschbares Aktivkohlefilterelement auf. Der Luftfilter besteht aus einem Rohr für die Aufnahme des Aktivkohlefilterelements und einem Zylinder mit Belüftungsöffnungen für die Aufnahmen des HEPA-Filterelements. Das Rohr weist einerseits eine erste Verschlusskappe mit einer Öffnung und andererseits eine zweite Verschlusskappe mit einer weiteren Öffnung auf. Der Ventilator ist an einer Außenseite der ersten Verschlusskappe angeordnet, wobei das Rohr über eine Aufnahme an der Außenseite der ersten Verschlusskappe reversibel mit dem Zylinder verbunden ist. Der Ventilator ist dabei innerhalb des Zylinders angeordnet. Zudem ist eine Klammerhalterung vorhanden, welche den Luftfilter mit dem 3D-Druckergehäuse reversibel verbindet.

Der erfindungsgemäße Luftfilter ist für die Anordnung in und/oder kleineren und vorzugsweise privat genutzten 3D-Druckergehäuse vorgesehen. Dies bedeutet, dass der Luftfilter durch seine vorteilhafte stabförmige Ausgestaltung insbesondere an den Bereichen innerhalb eines 3D-Druckergehäuses angeordnet werden kann, an denen die Funktion und die Bedienung des 3D-Druckers nicht beeinträchtigt wird. Dabei handelt es sich beispielsweise um die Eckbereiche zwischen der oberen und den seitlichen Innenwandungen des 3D-Druckergehäuses. Es ist aber prinzipiell unbedeutend, an welcher Stelle der erfindungsgemäße Luftfilter in einem 3D-Druckergehäuse angeordnet wird. Die Leistung des Luftfilters ist nicht von seiner Positionierung innerhalb des 3D-Druckergehäuses abhängig.

Der erfindungsgemäße Luftfilter weist einerseits einen Zylinder und andererseits ein Rohr auf. Das Rohr ist einerseits über eine erste Verschlusskappe und einen an einer Außenseite dieser ersten Verschlusskappe angeordnete Aufnahme mit dem Zylinder verbunden. Das Rohr weist andererseits eine zweite Verschlusskappe auf. Sowohl die erste als auch die zweite Verschlusskappe weisen Öffnungen auf, die erlauben, dass Luft in das Rohr ein- und ausströmen kann. Die Aufnahme der ersten Verschlusskappe für den Zylinder kann als Gewinde, Steckverbindung, Klipsverbindung oder über eine andere geeignete Verbindung erfolgen, solange diese Aufnahme reversibel ist, sodass der Zylinder mit der ersten Verschlusskappe verbunden und auch wieder von dieser getrennt werden kann.

In dem Rohr ist ein austauschbares Aktivkohlefilterelement angeordnet, welches eine zylindrische Form aufweist. In dem Aktivkohlefilterelement sind zwischen 100 und 200 Gramm, bevorzugt 150 Gramm, Aktivkohle angeordnet. Das Aktivkohlefilterelement dient dazu, Stoffen wie Staub, Schwermetalle sowie unerwünschte und giftige Chemikalien und Geruchs- und Geschmacksstoffe aus der durchströmenden Luft zu filtern.

Mit austauschbar ist gemeint, dass das Aktivkohlefilterelement händisch aus dem Rohr entnommen und gegen ein gereinigtes oder neues Aktivkohlefilterelement ausgetauscht werden kann. Das Austauschen erfolgt dadurch, dass die erste Verschlusskappe und/oder die zweite Verschlusskappe von dem Rohr gelöst wird/werden, sodass das Aktivkohlefilterelement aus dem Rohr entnommen und ersetzt werden kann.

In dem Zylinder ist ein HEPA-Filterelement angeordnet. Ein HEPA-Filterelement ist ein Schwebstofffilter (HEPA = High-Efficiency Particulate Air/Arrestance), welcher Partikel mit einem aerodynamischen Durchmesser kleiner 1 µm, wie Stäube, Aerosole und Rauchpartikel aus der Luft abscheiden kann. Auch das HEPA-Filterelement ist austauschbar, sollte es notwendig sein. Mit austauschbar ist auch hier gemeint, dass das HEPA-Filterelement händisch aus dem Zylinder entnommen und gegen ein gereinigtes oder neues HEPA-Filterelement ausgetauscht werden kann. Das Austauschen erfolgt dadurch, dass der Zylinder an der Aufnahme von der ersten Verschlusskappe reversibel getrennt wird, sodass das HEPA-Filterelement aus dem Zylinder entnommen und ersetzt werden kann.

Zwischen dem HEPA-Filterelement und dem Aktivkohlefilterelement ist ein Ventilator angeordnet. Der Ventilator ist dabei auf einer Außenseite der ersten Verschlusskappe des Rohrs angeordnet und steht damit über die Öffnung der ersten Verschlusskappe auch mit dem Rohr in Verbindung.

Ist der Zylinder über die Aufnahme mit der ersten Verschlusskappe verbunden, ist der Ventilator innerhalb des Zylinders angeordnet. Dies ist auf vorteilhafte Weise möglich, da der Zylinder zweiteilig aufgebaut ist. Der Zylinder weist eine erste Hälfte und eine zweite Hälfte auf. Die erste Hälfte kennzeichnet sich durch zahlreiche Belüftungsöffnungen, die an einer Mantelfläche des Zylinders angeordnet sind. Das HEPA-Filterelement ist im Inneren des Zylinders in dieser ersten Hälfte angeordnet. Dies ermöglicht, dass Luft, die über die Belüftungsöffnungen in den Zylinder gelangt bzw. von dem Ventilator angesaugt wird, zunächst das HEPA-Filterelement passieren muss.

Die zweite Hälfte des Zylinders, welche die Hälfte ist, die in Richtung der ersten Verschlusskappe und dem Rohr gerichtet ist, bietet Platz für den Ventilator. Die zweite Hälfte des Zylinders weist keine Belüftungsöffnungen auf, sodass nur Luft zu dem Ventilator gelangt, die zuvor die Belüftungsöffnungen und das HEPA-Filterelement passiert hat.

Dies bringt den Vorteil mit sich, dass der Ventilator nicht von beispielsweise Stäuben, Aerosolen oder Rauchpartikeln verunreinigt werden kann und damit keine Leistungseinbußen und auch kein erhöhter Geräuschpegel entstehen.

Der Ventilator ist ein Hochleistungslüfter, welcher vorzugsweise mit 24 Volt betrieben wird und bei einem sehr niedrigen Geräuschpegel, 80 bis 100 m³ Luft pro Stunde durch den Luftfilter befördert.

Der sehr niedrige Geräuschpegel von unter 30 dB(A) wird neben dem geräuscharmen Ventilator durch die vorteilhafte Anordnung des Ventilators im innerhalb des Zylinders des Luftfilters zwischen dem HEPA-Filterelement und dem Aktivkohlefilterelement erreicht. Die beiden Filterelemente sowie die stabförmige Ausformung des Luftfilters sorgen zusätzlich dafür, dass kaum Geräusche des Ventilators nach außen gelangen. Ist das 3D-Druckergehäuse geschlossen und der 3D-Drucker in Betrieb, ist der erfindungsgemäße Luftfilter akustisch nicht mehr wahrnehmbar. Dies ist ein wesentlicher Vorteil zu bisher bestehenden Luftfiltern.

Die Stromversorgung des Ventilators kann auf unterschiedliche Weise erfolgen. Der Luftfilter bzw. der Ventilator kann über einen 12-Volt-Anschluss direkt an einen 3D-Drucker in einem 3D-Druckergehäuse angeschlossen werden. Weiterhin ist es möglich den Luftfilter bzw. den Ventilator über ein übliches Netzteil an ein Stromnetz anzuschließen. Ferner ist vorgesehen, dass der Luftfilter für den Betrieb des Ventilators einen Energiespeicher aufweist. Dieser Energiespeicher können austauschbare Batterien und/oder wieder aufladbare Akkumulatoren sein. Diese Flexibilität erlaubt es, den erfindungsgemäßen Luftfilter für alle D3-Drucker bzw. 3D-Druckergehäuse in Hausgebrauch verwenden zu können.

Es kann auch vorgesehen sein, dass der Luftfilter einen zweiten Ventilator aufweist. Dieser erhöht die Leistung des Luftfilters weiter und kann auf dem ersten Ventilator aufgesetzt, oder an einer anderen Position, beispielsweise zwischen der ersten Verschlusskappe und dem Aktivkohlefilterelement im Rohr angeordnet sein.

Der Luftfilter weist eine oder auch mehrere Klammerhalterungen auf. Diese Klammerhalterungen sind einteilig und bestehen aus einer Basis und zwei gegenüberliegende Klemmarmen, einen ersten und einen zweiten Klemmarm. Die Innenbereiche der sich gegenüberliegenden Klemmarmen sowie der den Klemmarmen zugewandte Bereich der Basis bilden einen Aufnahmebereich für das Rohr. Der Aufnahmebereich ist entsprechend halbkreisförmig ausgebildet. Die beiden Klemmarme sind biegsam und erlauben es, dass das Rohr in diesen Aufnahmebereich und zwischen den beiden Klemmarmen reversibel eingeklemmt und sicher gehalten wird. Dadurch kann der Luftfilter über das Rohr in den Aufnahmebereich der Klammerhalterung reversibel aufgenommen oder entnommen werden.

Die Klammerhalterung wird mit der Seite der Basis, die den Klemmarmen gegenüberliegt, an eine Gehäusewand an der Innenseite eines 3D-Druckergehäuse angeordnet. Dazu wird die Basis mittels Verschraubung, Vernietung und/oder Verklebung an einer Innenwand des 3D-Druckergehäuses angeordnet. Dies ermöglicht auf einfache Weise, dass der Luftfilter genau an der Stelle in einem 3D-Druckergehäuse angeordnet wird, die platzsparend ist und an der er Luftfilter nicht den 3D-Druck und /oder den Zugriff auf den 3D-Drucker beeinträchtigt. Dabei besteht der Vorteil der reversiblen Befestigung des Luftfilters, was insbesondere bei der Bedienung des 3D-Druckes von Vorteil ist, da nicht zu befürchten ist, dass der Luftfilter auf dem Boden innerhalb des 3D-Druckergehäuses im Weg steht oder sonst störend ist.

Natürlich ist es aber auch möglich, den erfindungsgemäßen Luftfilter mittels zwei an dem Rohr angeordneten Klammerhalterung einfach auf einen Boden in Inneren des 3D-Druckergehäuse zu stellen, oder dort zu fixieren. Ferner kann der erfindungsgemäße Luftfilter auch ohne die Klammerhalterungen verwendet werden.

Die erste und die zweite Verschlusskappe, welche beidseits des Rohrs angeordnet sind, sind über ein Gewinde oder eine Steckverbindung und/oder eine Klipsverbindung mit dem Rohr reversibel verbunden. Dies ermöglicht es, den Luftfilter auf einfache Weise zu zerlegen, sollten Filterelemente ausgetauscht, oder andere Wartungen vorgenommen werden.

Sobald der Ventilator oder die beiden Ventilatoren des erfindungsgemäßen Luftfilters arbeiten, entsteht ein Luftstrom mit zu filternder Luft. Dieser Luftstrom reicht von den Belüftungsöffnungen in der ersten Hälfte der Mantelfläche des Zylinders durch das HEPA-Filterelement, den Ventilator, die Öffnung der ersten Verschlusskappe, das Aktivkohlefilterelement im Rohr und die weitere Öffnung der zweiten Verschlusskappe, wobei dort die gefilterte Luft wieder abgegeben wird.

Ist der erfindungsgemäße Luftfilter in einem 3D-Druckergehäuse angeordnet, dann arbeitet dieser als sogenannter Umluftfilter. Das bedeutet, dass die Luft, die in dem 3D-Druckergehäuse ist, kontinuierlich gefiltert und gereinigt wird.

Es ist aber auch vorgesehen, dass der erfindungsgemäße Luftfilter als sogenannter Abluftfilter eingesetzt wird. Dazu durchgreift die das Rohr mit der zweiten Verschlusskappe das 3D-Druckergehäuse von innen nach außen. Dies führt dazu, dass Luft aus dem 3D-Druckergehäuse angesogen, im Luftfilter gereinigt und dann nach außen abgegeben wird. Dies setzt natürlich voraus, dass das 3D-Druckergehäuse eine Öffnung für den Luftfilter und eine weitere Öffnung, über die frische Luft von außen in das 3D-Druckergehäuse, durch die Sogwirkung des Luftfilters, gelangt, aufweist.

Ferner kann auch vorgesehen sein, dass die zweite Verschlusskappe einen Abluftschlauch aufweist, welcher dann zu einer Abluftöffnung des 3D-Druckergehäuse führt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1: eine Ansicht schräg von oben auf einen Luftfilter 1,
Figur 2: eine Frontansicht auf einen Zylinder 3 des Luftfilters 1,
Figur 3: eine Rückansicht auf eine zweite Verschlusskappe 5 des Luftfilters 1,
Figur 4: eine Seitenansicht des Luftfilters 1 mit den Schnittlinien B und C,
Figur 5: eine geschnittene Ansicht des Luftfilters 1 entlang der Schnittlinie B,
Figur 6: eine geschnittene Ansicht des Luftfilters 1 entlang der Schnittlinie C,
Figur 7: eine Draufsicht des Luftfilters 1 mit der Schnittlinie A,
Figur 8: eine geschnittene Ansicht des Luftfilters 1 entlang der Schnittlinie A.

### Ausführungsbeispiel

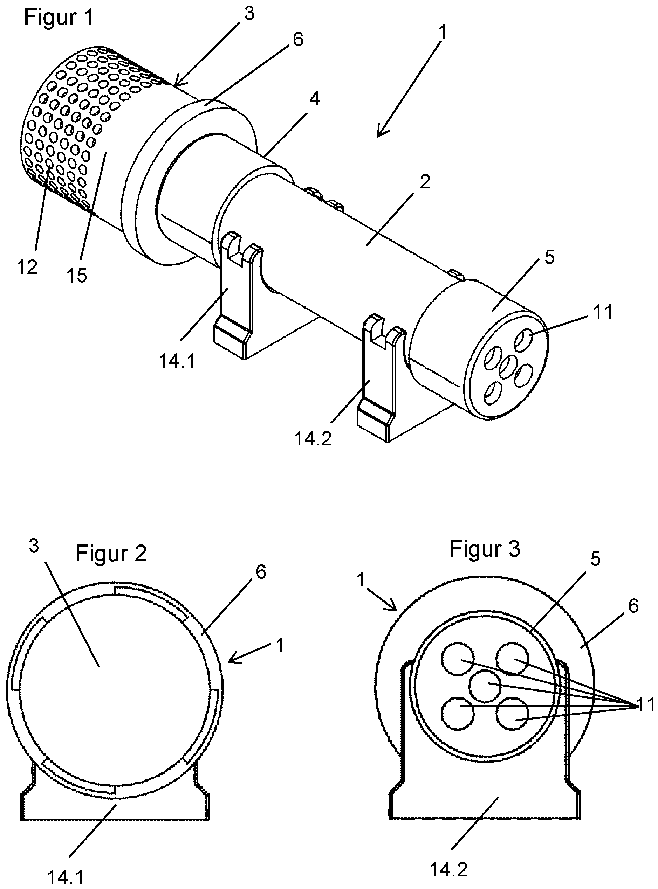

In Figur 1 ist eine Ansicht schräg von oben auf einen erfindungsgemäßen Luftfilter 1 dargestellt. Der erfindungsgemäße Luftfilter 1 ist stabförmig. Ein Rohr 2 ist einerseits mit einer zweiten Verschlusskappe 5 verschlossen. Diese zweite Verschlusskappe 5 weist im vorliegenden Ausführungsbeispiel mehrere weitere Öffnungen 11 auf, über die eine Verbindung in das Innere des Rohrs 2 besteht.

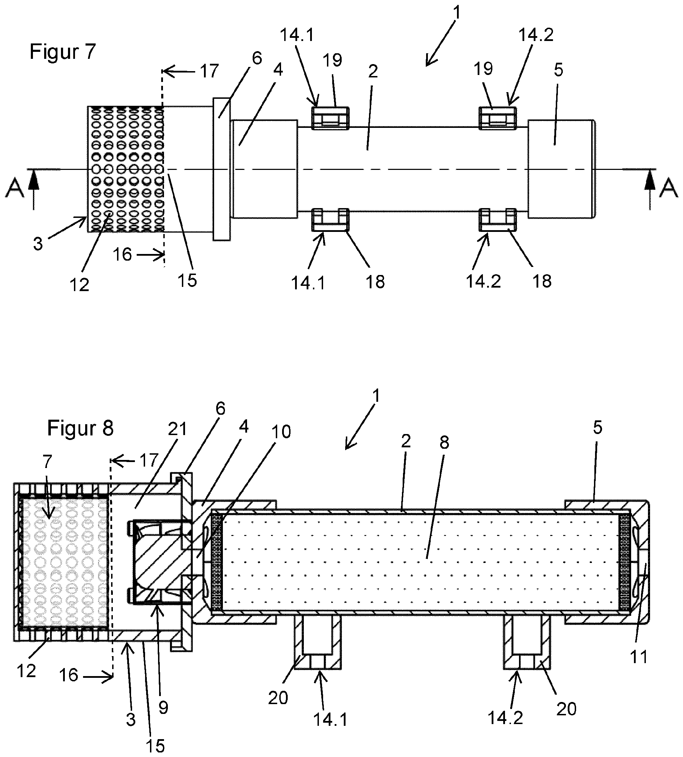

Das Rohr 2 weist andererseits eine erste Verschlusskappe 4 auf. Auch die erste Verschlusskappe 4 hat eine Öffnung 10, welche in Figur 8 ersichtlich ist.

An der ersten Verschlusskappe 4 ist an einer Außenseite 13, welche die Seite ist, die von dem Rohr 2 abgewandt ist, eine Aufnahme 6 angeordnet. Über diese Aufnahme 6 ist ein Zylinder 3 mit der ersten Verschlusskappe 4 reversibel verbunden. In vorliegenden Ausführungsbeispiel ist diese Aufnahme 6 als Gewinde ausgebildet, wie in Figur 8 ersichtlich ist.

Weiterhin sind in Figur 1 Klammerhalterungen 14.1, 14.2 ersichtlich, welche den Luftfilter 1 im Bereich des Rohrs 2 reversibel halten.

In Figur 2 ist eine Frontansicht auf den Zylinder 3 des Luftfilters 1 ersichtlich. Aus dieser Ansicht ist zudem die Klammerhalterung 14.1 und die Aufnahme 6 der ersten Verschlusskappe 4 zu erkennen. Die Aufnahme 6 weist einen größeren Durchmesser als der Zylinder 3, die erste Verschlusskappe 4 und das Rohr 2 auf.

In Figur 3 ist eine Rückansicht des Luftfilters 1 auf die zweite Verschlusskappe 5 dargestellt. In dem dargestellten Ausführungsbeispiel weist die zweite Verschlusskappe 5 fünf weitere Öffnungen 11 auf. Ferner ersichtlich ist die Aufnahme 6 von der Seite, an der sie mit dem Rohr 2 verbunden ist.

Sowohl die erste als auch die zweite Verschlusskappe 4, 5 weisen Öffnungen 10,11 auf, die erlauben, dass Luft in das Rohr 2 ein- und ausströmen kann.

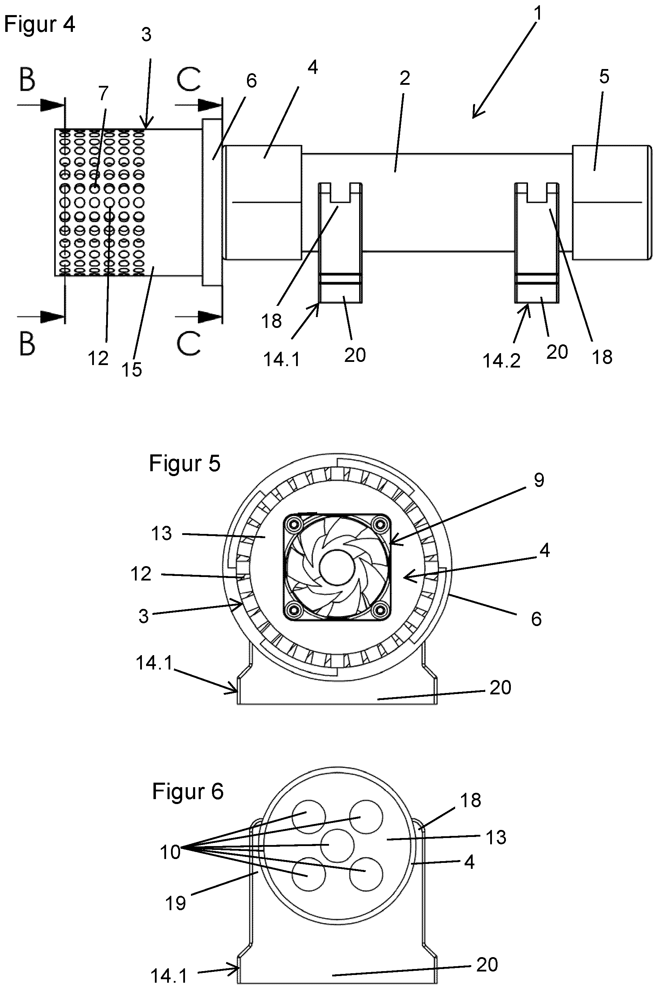

In Figur 4 ist eine Seitenansicht des Luftfilters 1 mit einer Schnittlinien B und einer Schnittlinie C dargestellt. Auch hier sind zwei Klammerhalterungen 14.1 und 14.2 ersichtlich, wobei jeweils ein erster Klemmarm 18 und eine Basis 20 zu erkennen sind. Ferner sind die Belüftungsöffnungen 12 auf einer Mantelfläche 15 des Zylinders 3 zu erkennen. Auch zu erkennen ist die Aufnahme 6 sowie die Klammerhalterung 14.2 mit ihrer Basis 20.

In Figur 5 ist eine geschnittene Ansicht des Luftfilters 1 entlang der Schnittlinie B aus Figur 4 dargestellt. Die geschnittene Ansicht entlang der Schnittlinie B gibt den Blick auf einen Ventilator 9 frei. Der Ventilator 9 ist an einer Außenseite 13 der ersten Verschlusskappe 4 auf der Öffnung 10 angeordnet. Somit steht der Ventilator 9 über die Öffnung 10 mit dem Rohr 2 in Verbindung.

In Figur 6 ist eine geschnittene Ansicht des Luftfilters 1 entlang der Schnittlinie C aus Figur 4 dargestellt. Die geschnittene Ansicht entlang der Schnittlinie C gibt den Blick in das Innere des Rohrs 2 frei, an dessen gegenüberliegenden Ende die zweite Verschlusskappe 5 mit ihren fünf weiteren Öffnungen 11 ersichtlich ist.

Es ist zu erkennen, dass die Klammerhalterung 14.1 einteilig ist und aus einer Basis 20 und zwei gegenüberliegende Klemmarmen besteht, einen ersten Klemmarm 18 und einen zweiten Klemmarm 19. Die Innenbereiche der sich gegenüberliegenden Klemmarme 18 und 19 sowie der den Klemmarmen 18 und 19 zugewandte Bereich der Basis 20, bilden einen Aufnahmebereich für das Rohr 2. Das Rohr 2 ist in dieser Ansicht durch die erste Verschlusskappe 4 verdeckt. Der Aufnahmebereich der Klammerhalterung 14.1 ist dem Rohr 2 entsprechend halbkreisförmig ausgebildet. Die beiden Klemmarme 18 und 19 halten das Rohr 2 in diesem Aufnahmebereich durch eine Klemmwirkung. Die Seite der Basis 20, welche von den beiden Klemmarme 18 und 19 abgewandt ist, dient zur Anordnung an einer Innenwand eines 3D-Druckergehäuses.

In Figur 7 ist eine Draufsicht des Luftfilters 1 mit einer Schnittlinie A dargestellt. Hier ist zu erkennen, dass der Zylinder 3 zweiteilig aufgebaut ist und eine erste Hälfte 16 und eine zweite Hälfte 17 aufweist. Die erste Hälfte 16 weist die zahlreichen Belüftungsöffnungen 12 auf, die an der Mantelfläche 15 des Zylinders angeordnet sind. Die zweite Hälfte 17 weist hingegen keine Belüftungsöffnungen auf. Das HEPA-Filterelement 7 ist im Inneren des Zylinders 3 in der ersten Hälfte 16 angeordnet, wie auch in Figur 8 ersichtlich ist.

In Figur 8 ist eine geschnittene Ansicht des Luftfilters 1 entlang der Schnittlinie A aus Figur 7 dargestellt. Hier ist gut zu erkennen, dass der Ventilator 9 mit der Vorderseite 13 der ersten Verschlusskappe 4 verbunden und dort auf der Öffnung 10 positioniert ist. Ferner ist die Zweiteiligkeit des mit der Aufnahme 6 der ersten Verschlusskappe 4 verbundenen Zylinders 3 ersichtlich. Es ist zu sehen, dass das HEPA-Filterelement 7 in der ersten Hälfte 16 innerhalb des Zylinders 3 angeordnet ist, welche die Belüftungsöffnungen 12 aufweist. In der zweiten Hälfte 17, welche die Hälfte ist, die mit der Ausnahme 6 reversibel verbindbar ist, weist der Zylinder 3 einen Freiraum 21 auf, welcher Platz für einen oder mehrere Ventilatoren 9 bietet. Die zweite Hälfte 17 des Zylinders 3 weist keine Belüftungsöffnungen 12 auf.

Bezugnehmend auf die Figuren 1 bis 8 erklärt sich die Funktionsweise des erfindungsgemäßen Luftfilters 1 folgendermaßen:
Der erfindungsgemäße Luftfilter 1, welcher an eine Stromquelle angeschlossen ist, oder über einen Energiespeicher betrieben wird, wird innerhalb eines 3D-Druckergehäuses angeordnet und bei Betrieb des 3D-Druckers eingeschaltet. Die Anordnung innerhalb eines 3D-Druckergehäuses erfolgt bevorzugt über die Klammerhalterung 14.1, 14.2. Die Klammerhalterung 14.1, 14.2 wird mit der Basis 20 an einer geeigneten Position innerhalb des 3D-Druckergehäuses an einer Innenwand mittels Verschraubung, Vernietung, Verklebung oder einer anderen geeigneten Befestigungsmethode angeordnet. Die Klammerhalterung 14.1, 14.2 erlaubt es das Rohr 2 mittels der beiden Klemmarme 18, 19 sicher aber reversibel aufzunehmen. Dies bringt den zusätzlichen Vorteil mit sich, dass der erfindungsgemäße Luftfilter 1, sollte es für die Reinigung, den Transport, oder aus anderen Gründen nötig ihn vorübergehend aus dem 3D-Druckergehäuses entnehmen zu müssen, leicht entnommen und ebenso leicht wieder eingesetzt werden kann.

Während des Betriebs des 3D-Druckers saugt, der Ventilator 9 zu filternde Luft, die in dem 3D-Druckergehäuses durch den Druck verunreinigt wurde, an. Dabei gelangt die zu filternde Luft über die Belüftungsöffnungen 12 des Zylinders 3 in das HEPA-Filterelement 7. Von dort wird die Luft durch den Freiraum 21 und durch den Ventilator 9 weiter durch die Öffnung 10 der ersten Verschlusskappe 4 befördert. Dann gelangt die Luft in das Rohr 2 und das dort angeordnete Aktivkohlefilterelement 8, bevor sie schließlich wieder frisch gefiltert über die weiteren Öffnungen 11 der zweiten Verschlusskappe 5 abgegeben wird. Dabei wird der erfindungsgemäße Luftfilter 1 als Umluftfilter eingesetzt.

Sobald der erfindungsgemäße Luftfilter 1 eine Wandung des 3D-Druckergehäuses von innen nach außen durchgreift, beispielsweise mit der ersten Verschlusskappe 4, dem Rohr 2 oder der zweiten Verschlusskappe 5, wird verunreinigte Luft aus dem Inneren des 3D-Druckergehäuses angesaugt, auf dem gleichen Weg, wie oben beschreiben, gefiltert und dann gereinigt nach außen abgegeben. Die gefilterte Luft aus dem Inneren des 3D-Druckergehäuses wird also nach Außen abgegeben. Diese Umluftfunktion kann aber nur dann erfolgen, wenn gewährleistet wird, dass das 3D-Druckergehäuse auch eine Öffnung aufweist, über die Luft von außen in das 3D-Druckergehäuse gelangen kann.

Obwohl nur eine/einige bevorzugte Ausführungsbeispiel/e der Erfindung beschrieben und dargestellt wurde/n, ist es offensichtlich, dass der Fachmann zahlreiche Modifikationen hinzufügen kann, ohne Wesen und Umfang der Erfindung zu verlassen. Insbesondere kann die Größe des Rohrs 2 und des Zylinders 3 vergrößert oder verkleinert werden, sodass individuelle Anpassungen an bestimmte 3D-Drucker und bestimmte 3D-Druckergehäuse erfolgen kann. Entsprechend variabel ist die Größe und Leistungsfähigkeit des/der Ventilators/en 9 und der jeweiligen Filterelemente 7, 8.

### Bezugszeichenliste

| | | | |
|---|---|---|---|
| 1 | Luftfilter | A-A | Schnittlinie A |
| 2 | Rohr | B-B | Schnittlinie B |
| 3 | Zylinder | C-C | Schnittlinie C |
| 4 | erste Verschlusskappe | | |
| 5 | zweite Verschlusskappe | | |
| 6 | Aufnahme | | |
| 7 | HEPA-Filterelement | | |
| 8 | Aktivkohlefilterelement | | |
| 9 | Ventilator | | |
| 10 | Öffnung | | |
| 11 | weitere Öffnung | | |
| 12 | Belüftungsöffnungen | | |
| 13 | Außenseite | | |
| 14.1, 14.2 | Klammerhalterung | | |
| 15 | Mantelfläche | | |
| 16 | erste Hälfte | | |
| 17 | zweite Hälfte | | |
| 18 | erster Klemmarm | | |
| 19 | zweiter Klemmarm | | |
| 20 | Basis | | |
| 21 | Freiraum | | |
| | | | |
| | | | |
| | | | |

## Patentansprüche

1. Luftfilter (1) für die Anordnung in und/oder an einem 3D-Druckergehäuse, mit einem Ventilator (9), einem austauschbaren HEPA-Filterelement (7) und einem austauschbaren Aktivkohlefilterelement (8),
**gekennzeichnet durch**,
ein Rohr (2) für die Aufnahme des Aktivkohlefilterelements (8) und einen Zylinder (3) mit Belüftungsöffnungen (12) für die Aufnahmen des HEPA-Filterelements (7), wobei das Rohr (2) einerseits eine erste Verschlusskappe (4) mit einer Öffnung (10) und andererseits eine zweite Verschlusskappe (5) mit einer weiteren Öffnung (11) aufweist, wobei der Ventilator (9) an einer Außenseite (13) der ersten Verschlusskappe (4) angeordnet ist, wobei das Rohr (2) über eine Aufnahme (6) an der Außenseite (13) der ersten Verschlusskappe (4) reversibel mit dem Zylinder (3) verbunden ist, wobei der Ventilator (9) innerhalb des Zylinders (3) angeordnet ist und wobei eine Klammerhalterung (14) vorhanden ist, welche den Luftfilter (1) mit dem 3D-Druckergehäuse reversibel verbindet.

2. Luftfilter nach Anspruch 1, **dadurch gekennzeichnet, dass** die Belüftungsöffnungen (12) in Bereich einer ersten Hälfte (16) einer Mantelfläche (15) des Zylinders (3) angeordnet sind.

3. Luftfilter nach Anspruch 1 und 2, **dadurch gekennzeichnet, dass** das austauschbare Aktivkohlefilterelement (8) innerhalb des Zylinders (3) im Bereich der Belüftungsöffnungen (12) der ersten Hälfte (16) der Mantelfläche (15) angeordnet ist.

4. Luftfilter nach Anspruch 1, **dadurch gekennzeichnet, dass** der Ventilator (9) zur Stromversorgung an einen 3D-Drucker anschließbar ist, oder an ein anderes Stromnetz anschließbar ist, und/oder einen integrierten Energiespeicher aufweist.

5. Luftfilter nach Anspruch 1, **dadurch gekennzeichnet, dass** die Klammerhalterung (14) an einer Basis (20) mittels Verschraubung, Vernietung und/oder Verklebung an einer Innenwand des 3D-Druckergehäuses angeordnet ist.

6. Luftfilter nach Anspruch 1, **dadurch gekennzeichnet, dass** die Klammerhalterung (14) den Luftfilter (1) im Bereich des Rohrs (2) reversibel zwischen einem ersten Klemmarm (18) und einem zweiten Klemmarm (19) hält.

7. Luftfilter nach Anspruch 1, **dadurch gekennzeichnet, dass** die erste Verschlusskappe (4) und die zweite Verschlusskappe (5) über ein Gewinde oder eine Steckverbindung und/oder eine Klipsverbindung mit dem Rohr (2) reversibel verbunden sind.

8. Luftfilter nach Anspruch 1, **dadurch gekennzeichnet, dass** ein Luftstrom von den Belüftungsöffnungen (12) des Zylinders (3) durch das HEPA-Filterelement (7), einen Freiraum (21), den Ventilator (9), die Öffnung (10) der ersten Verschlusskappe (4), das Aktivkohlefilterelement (8) im Rohr (2) und die weitere Öffnung (11) der zweiten Verschlusskappe (5) erfolgt.

9. Luftfilter nach Anspruch 1, **dadurch gekennzeichnet, dass** ein zweiter Ventilator angeordnet ist.

10. Luftfilter nach Anspruch 1, **dadurch gekennzeichnet, dass** die zweite Verschlusskappe (5) mit der weiteren Öffnung (11) das 3D-Druckergehäuse von innen nach außen durchgreift.
